# EUROPEAN PATENT APPLICATION

(11) **EP 2 760 061 A1**
(43) Date of publication of application: **30.07.2014**
(21) Application number: 13194745.9
(22) Date of filing: 28.11.2013
(51) Int. Cl.: H01M 2/02, H01M 2/06, H01M 2/34, H01M 2/08

(54) **Battery cell with a protection element**

(30) Priority: 29.01.2013 US 201361758182 P; 30.10.2013 US 201314067680
(71) Applicant: Samsung SDI Co., Ltd., Yongin-si, Gyeonggi-do (KR)
(72) Inventor: Hur, Sang-Do, Yongin-si, Gyeonggi-do (KR)
(74) Representative: Gulde & Partner

(57) **Abstract**

The present invention refers to a battery cell (100a) including an electrode assembly (110) having first and second electrode tabs (112, 113); a case (120a) accommodating the electrode assembly (111) therein and having a sealing portion (126a, 126b, 126c) formed at the edge of the case (120a); a protection element (140) connected to one of the electrode tabs (112, 113); and a mounting portion (130a, 130b, 130c) positioned in the sealing portion (126a, 126b, 126c) and accommodating the protection element (140) therein.

## Description

An aspect of the present invention relates to a battery pack.

### DESCRIPTION OF THE RELATED ART

Recently, secondary batteries have been variously used as power sources of potable electronic devices. As the portable electronic devices are used in various fields, demands on secondary batteries are rapidly increased. The secondary batteries can be charged/discharged a plurality of times, and accordingly are economically and environmentally efficient. Thus, the use of the battery packs is encouraged.

As the small size and light weight of electronic devices are required, the small size and light weight of secondary batteries are also required. However, since a material such as lithium having high reactivity is provided to the inside of the secondary battery, the small size and light weight of the secondary battery is limited due to the safety of the secondary battery. Accordingly, a variety of studies have been conducted to develop a battery cell that can be implemented as a small and light battery cell while improving the safety of the secondary battery.

### SUMMARY

Embodiments provide a battery cell having improved safety while being in small in size and light in weight by employing a new structure.

According to the present invention, there is provided a battery cell as defined in claim 1.

Further embodiments of the invention could be learned from the dependent claims. Other features and advantages of the present invention will become more fully apparent from the following detailed description, taken in conjunction with the accompanying drawings.

According to the battery cell of the present invention, a protection element is positioned in a sealing portion of a case, so that it is possible to improve the safety of the battery cell while implementing the miniaturization of the battery cell.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery cell according to an embodiment of the present invention.
FIG. 2 is an exploded perspective view of the battery cell shown in FIG. 1.
FIG. 3 is a sectional view of the battery cell taken along line A-A' of FIG. 1.
FIG. 4 is a perspective view of a battery cell according to another embodiment of the present invention.
FIG. 5 is an exploded perspective view of the battery cell shown in FIG. 4.
FIG. 6 is a perspective view of the battery cell shown in FIG. 4, of which sealing portion is bent.
FIG. 7 is a perspective view of a battery cell according to still another embodiment of the present invention.
FIG. 8 is an exploded perspective view of the battery cell shown in FIG. 7.
FIG. 9 is a perspective view of the battery cell shown in FIG. 7, of which sealing portion is bent.

### DETAILED DESCRIPTION

In the following detailed description, only certain exemplary embodiments of the present invention have been shown and described, simply by way of illustration. When an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

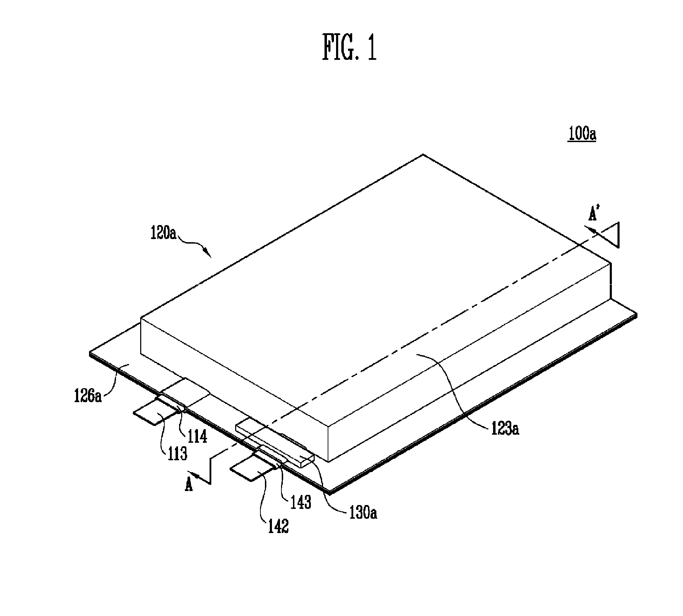

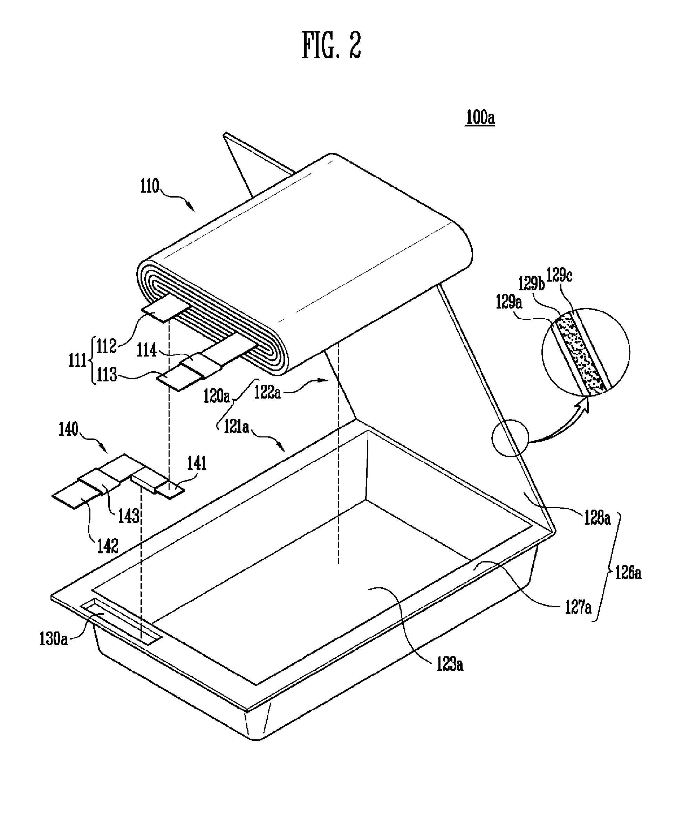

FIG. 1 is a perspective view of a battery cell 100a according to an embodiment of the present invention. FIG. 2 is an exploded perspective view of the battery cell 100a shown in FIG. 1. For convenience of illustration, FIG. 2 is an exploded perspective view showing a state in which the battery cell 100a shown in FIG. 1 is turned over. Hereinafter, the battery cell 100a according to this embodiment will be described with reference to FIGS. 1 and 2.

As shown in FIGS. 1 and 2, the battery cell 100a according to this embodiment includes an electrode assembly 110 having an electrode tab 111, a case 120a accommodating the electrode assembly 110 and having a sealing portion 126a formed at an edge thereof, and a protection element 140 connected to the electrode tab 111 and positioned in the case 120a.

The electrode assembly 110 is a member having the electrode tab 111 at one side thereof. The electrode assembly 110 forms, together with the case 120a, the battery cell 100a or a bare cell so as to generate electrochemical energy through the movement of ions or electrons.

Here, the electrode assembly 110 may include a first electrode plate, a second electrode plate, a separator interposed between the first and second electrode plates, and the electrode tab 111 having first and second electrode tabs 112 and 113 extracted to the outside of the electrode assembly 110. In this case, the first and second electrode plates may include positive and negative electrode plates, respectively, and the first and second electrode tabs 112 and 113 may include positive and negative electrode tabs, respectively. The electrode tab 111 may be extracted from the one side of the electrode assembly 110 so as to provide the outside of the electrode assembly 110 or the protection element 140 with the electrochemical energy generated inside the battery cell 100a. The electrode assembly 110 may be manufactured by various methods of winding or stacking the first electrode plate, the second electrode plate and the separator, etc. In the present invention, it will be apparent that the electrode assembly 110 may include all types of electrode assembly such as a stacking type electrode assembly and a winding type electrode assembly.

The case 120a is a member that accommodates the electrode assembly 110 therein. The case 120a may include a first subcase 121 a and a second subcase 122a.

Here, a mounting portion 130a accommodating the protection element 140 therein and an accommodating portion 123a accommodating the electrode assembly 110 therein are formed in the first subcase 121 a, and the second subcase 122a is implemented to cover the first subcase 121 a. Therefore, the mounting portion 130a of the first subcase 121 a may be provided to correspond to the shape and size of the protection element 140, and the accommodating portion 123a of the first subcase 121 a may be provided to correspond to the shape and size of the electrode assembly 110. For example, the mounting portion 130a and the accommodating portion 123a may be manufactured through a deep drawing process of making a hollow container without any joint, using a flat plate.

The first and second subcases 121 a and 122a may be coupled to each other by the sealing portion 126a formed at the edge of the case 120a. Specifically, the protection element 140 is accommodated in the mounting portion 130a formed at a first edge portion 127a of the first subcase 121 a, and the electrode assembly 110 and an electrolyte are accommodated in the accommodating portion 123a of the first subcase 121 a. Then, the first edge portion 127a of the first subcase 121 a and a second edge portion 128a of the second subcase 122a are thermally fused to each other in a state in which the first and second subcases 121 a and 122a are adhered closely to each other, thereby forming the sealing portion 126a. Accordingly, the battery cell 100a can be manufactured. That is, in this embodiment, the battery cell 100a may be implemented as a pouch-type battery cell.

Meanwhile, the case 120a may sequentially include an inner resin layer 129a, a metal layer 129b and an outer resin layer 129c. In this case, the inner resin layer 129a is a portion directly facing the electrode assembly 110, and the outer resin layer 129c is a portion corresponding to the outermost surface of the case 120a. The inner and outer resin layers 129a and 129c may be made of a polymer resin or the like, which is an electrical nonconductor, so as to prevent a short circuit therebetween. Particularly, a portion of the inner resin layer 129a forms the sealing portion 126a to couple the first and second subcases 121 a and 122a to each other. For example, the inner and outer resin layers 129a and 129c may include casting polypropylene (CPP). The metal layer 129b is provided between the inner and outer resin layers 129a and 129c so as to provide the case 120a with a predetermined mechanical strength. For example, the metal layer 129b may include aluminum, etc.

When the electrode tab 111 contacts the metal layer 129b exposed at an end of the sealing portion 126, there may occur an electrical short circuit between the electrode tab 111 and the metal layer 129b. In order to prevent the electrical short circuit, the electrode tab 111 according to this embodiment may be further provided with an electrode tab film 114. Here, the electrode tab film 114 may be provided to be mounted on the sealing portion 126a, and may be made of an electrical nonconductor, thereby preventing the short circuit between the electrode tab 111 and the metal layer 129b. The electrode tab film 114 is made of a material similar to the sealing portion 126a so that the sealing portion 126a can be completely thermally fused. Accordingly, the electrode tab made of metal can be completely adhered closely to the sealing portion 126a. As a result, the sealing performance of the case 120a can be reinforced by the electrode tab film 114. In this case, the second electrode tab113 of the electrode assembly 110 is extracted to the outside through the sealing portion 126a, and the first electrode tab 112 of the electrode assembly 110 is connected to the protection element 140 positioned in the mounting portion 130a of the sealing portion 126a so as not to be exposed to the outside. Therefore, the electrode tab film 114 may be provided to the second electrode tab 113.

Meanwhile, the mounting portion 130a of the battery cell 100a according to this embodiment may be formed in the sealing portion 126a of the case 120a. Specifically, in this embodiment, the mounting portion 130a may be formed at the first edge portion 127a of the first subcase 121 a, and the outer surface of the mounting portion 130a may be formed to protrude outward in the same direction as the outer surface of the accommodating portion 123a. In this case, both the mounting portion 130a and the accommodating portion 123a are protruded in the same direction, which may be preferable in terms of space efficiency. When being viewed from the inside of the case 120a, the mounting portion 130a may be concavely formed so that the inner surface of the mounting portion 130a can accommodate the protection element 140, and the protection element 140 can be mounted in the concave space.

The protection element 140 is a member that is connected between the electrode assembly 110 and a protective circuit module so as to cut off current when abnormal current flows in the battery cell 100a. The protection element 140 may be mounted in the mounting portion 130a.

Here, the protection element 140 may be implemented as, for example, a positive temperature coefficient (PTC) element, fuse, breaker, etc. If the abnormal current flows in the battery cell 100a, the resistance of the protection element 140 increases, so as to cut off current flowing through first and second connection portions 141 and 142 provided in the protection element 140. The first connection portion 141 may be connected to the first electrode tab 112, and the second connection portion 142 may be extracted to the outside of the battery cell 100a through the sealing portion 126a. Thus, when being viewed from the outside of the battery cell 100a, it can be seen that the second connection portion 142 of the protection element 140 and the second electrode tab 113 are exposed. In this case, the second connection portion 142 is extracted to the outside through the sealing portion 126a, and hence the protection element 140 may be further provided with a connection portion film 143 so that the metal layer 129b at the end of the sealing portion 126a is not short-circuited with the second connection portion 142. The connection portion film 143 is made of a material similar to the sealing portion 126a so that the second connection portion 142 and the sealing portion 126 can be completely thermally fused.

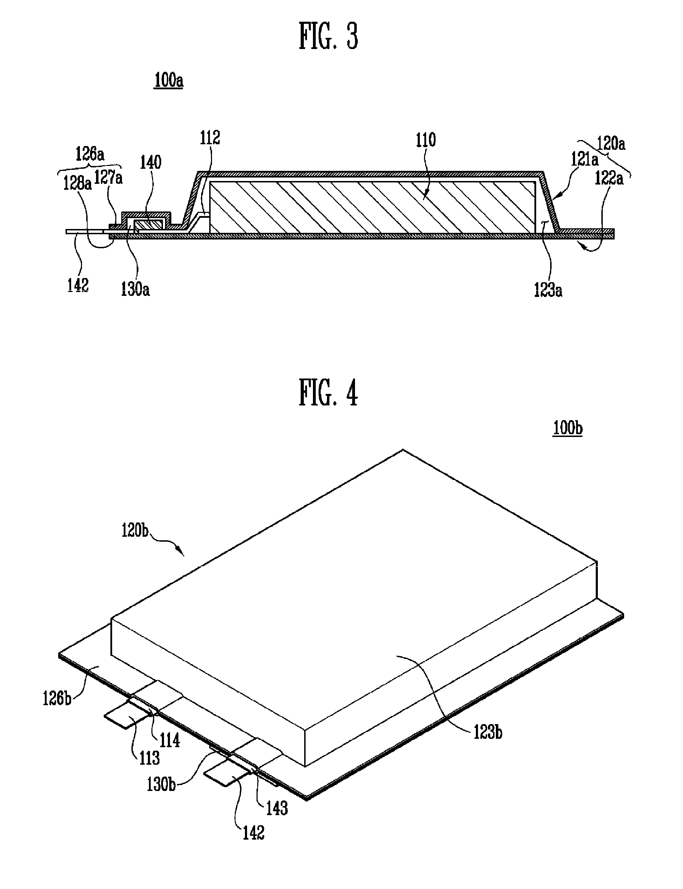

FIG. 3 is a sectional view of the battery cell 100a taken along line A-A' of FIG. 1. Hereinafter, the mounting portion 130a according to this embodiment will be described in detail with reference to FIG. 3.

Here, the protection element 140 may be positioned in the case 120a, more specifically the mounting portion 130a formed in the sealing portion 126a. In this case, the protection element 140 having a relatively small size is positioned in the concave space inside the mounting portion 130a, and hence the size of the internal space of the mounting portion 130a may be smaller than that of the accommodating portion 123a in which the electrode assembly 110 is positioned. The mounting portion 130a and the accommodating portion 123a may be divided by the sealing portion 126a so as to be individually sealed hermitically. Thus, there is no concern that the electrolyte positioned in the accommodating portion 123a contacts the protection element 140 positioned in the mounting portion 130a. Accordingly, the safety of the battery cell 100a can be improved. In a case where the protection element 140 positioned in the mounting portion 130a is exposed to the outside, there is a concern that the protection element 140 may be damaged or undesirably short-circuited. Hence, surroundings of the mounting portion 130a may all be sealed hermitically by the sealing portion 126a.

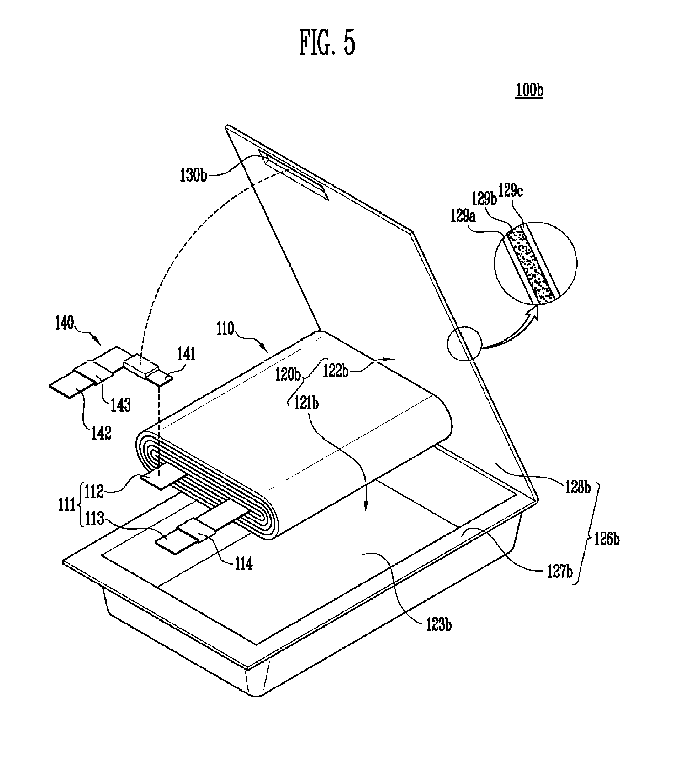

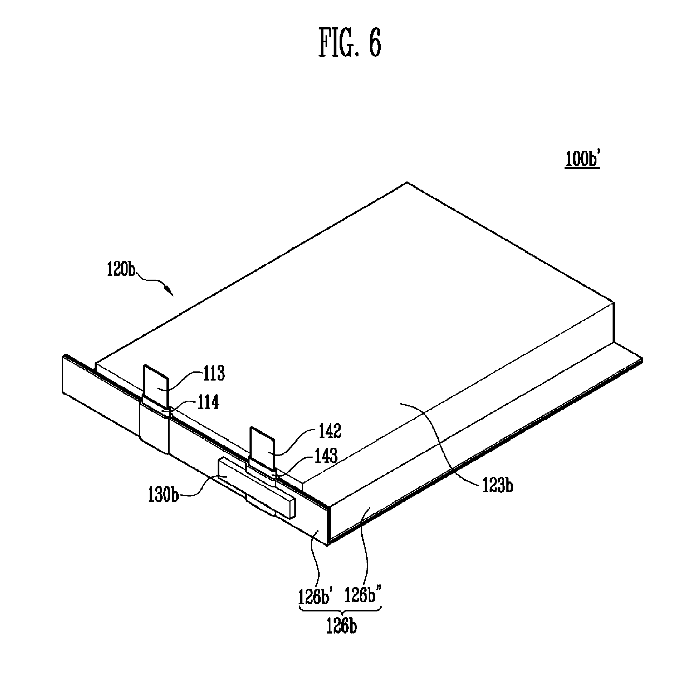

FIG. 4 is a perspective view of a battery cell 100b according to another embodiment of the present invention. FIG. 5 is an exploded perspective view of the battery cell 100b shown in FIG. 4. FIG. 6 is a perspective view of the battery cell 100b shown in FIG. 4, of which sealing portion 126b is bent. For convenience of illustration, FIG. 5 is an exploded perspective view showing a state in which the battery cell 100b shown in FIG. 4 is turned over. Hereinafter, the battery cell 100b and 100b' according to this embodiment will be described with reference to FIGS. 4, 5 and 6. Here, components identical or corresponding to those of the aforementioned embodiment are designated by like reference numerals, and their detailed descriptions will be omitted to avoid redundancy.

Specifically, as shown in FIGS. 4 and 5, in the battery cell 100b according to this embodiment, the protruding directions of a mounting portion 130b and the outer surface of an accommodating portion 123b may be opposite to each other before the sealing portion 126b is bent, i.e., in a state in which the sealing portion 126b is unfolded. That is, the mounting portion 130b is formed to protrude from a second edge portion 128b of a second subcase 122b, which constitutes, together with a first edge portion 127b of a first subcase 121 b, the sealing portion 126, so as to be protruded in the opposite direction to the accommodating portion 123b formed to protrude from the first subcase 121 b.

In a case where the mounting portion 130b and the outer surface of the accommodating portion 123b are protruded in directions opposite to each other, it may be disadvantageous in terms of space efficiency. Therefore, the space of the battery cell 100b may be efficiently used by bending the sealing portion 126b as shown in FIG. 6. Specifically, the sealing portion 126b may be bent so that the other surface opposite to the one surface of both surfaces of the sealing portion 126b, from which the outer surface of the mounting portion 130b is protruded, faces the accommodating portion 123b. That is, the sealing portion 126b may be bent so that the protruded outer surface of the mounting portion 130b faces the outside of a case 120b. Accordingly, the effective space of the battery cell 100b can be expanded.

Meanwhile, the sealing portion 126b may include a first sealing portion 126b' in the extracting direction of the second electrode tab 113 and the second connection portion 142, and second sealing portions 126" respectively extended from both ends of the first sealing portion 126b'. In addition to the first sealing portion 126', the second sealing portion 126b" is also bent to face the accommodating portion 123b, thereby further improving space efficiency. A third sealing portion may also be provided on a surface opposite to the first sealing portion 126b'.

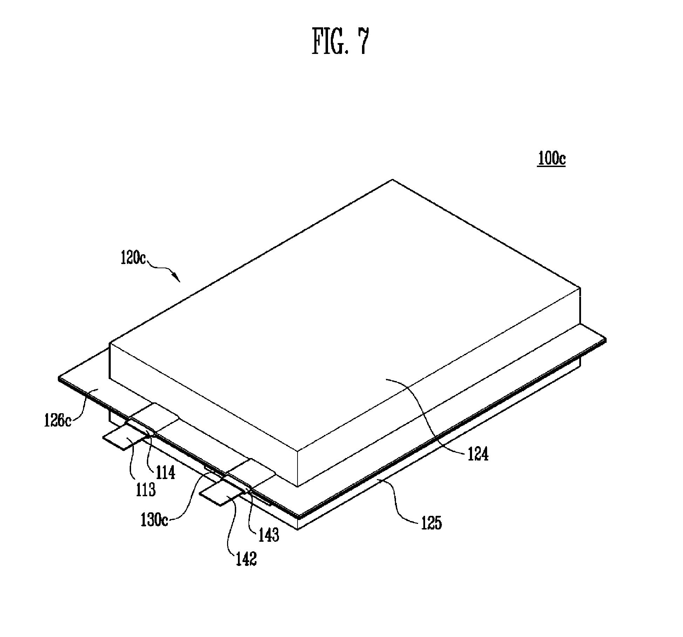

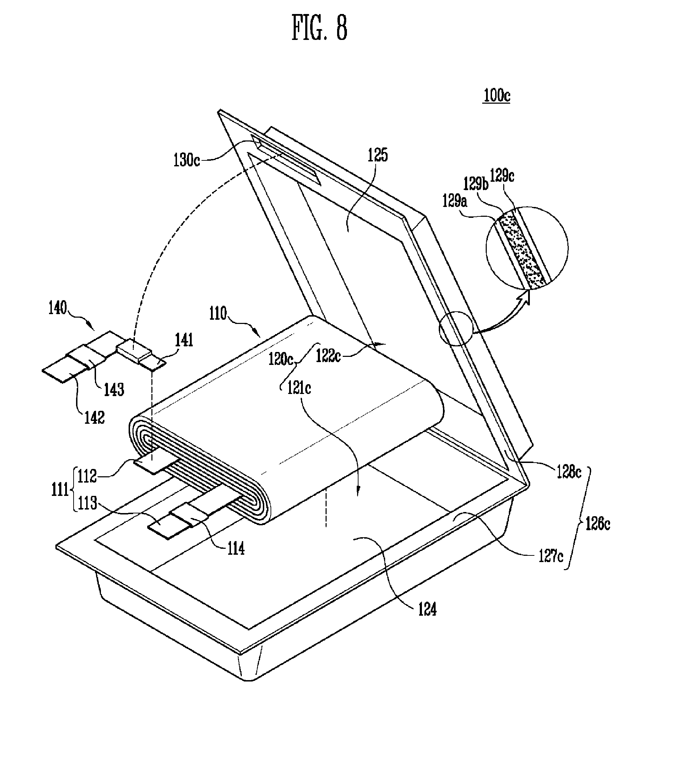

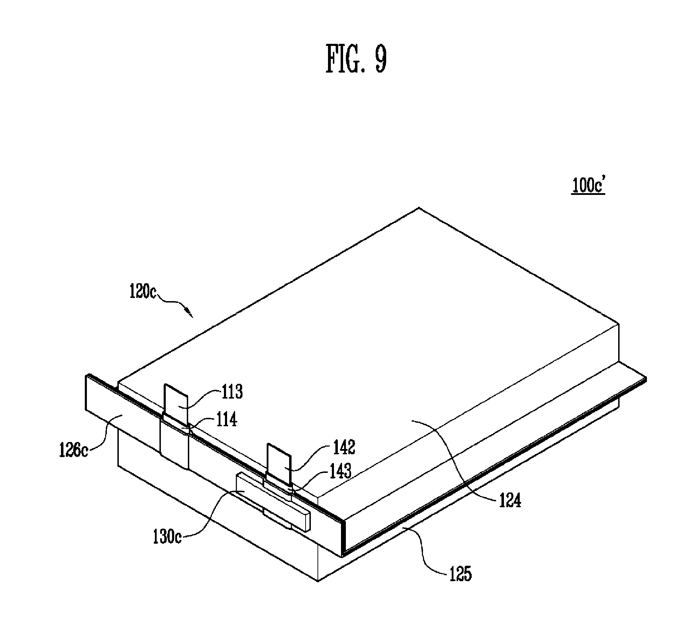

FIG. 7 is a perspective view of a battery cell 100c according to still another embodiment of the present invention. FIG. 8 is an exploded perspective view of the battery cell 100c shown in FIG. 7. FIG. 9 is a perspective view of the battery cell 100c shown in FIG. 7, of which sealing portion 126c is bent. For convenience of illustration, FIG. 8 is an exploded perspective view showing a state in which the battery cell 100c shown in FIG. 7 is turned over. Hereinafter, the battery cell 100c and 100c' according to this embodiment will be described with reference to FIGS. 7, 8 and 9. Here, components identical or corresponding to those of the aforementioned embodiments are designated by like reference numerals, and their detailed descriptions will be omitted to avoid redundancy.

As shown in FIGS. 7 and 8, the battery cell 100c according to this embodiment includes the electrode assembly 110, a case 120c and the protection element 140. A first accommodating portion 124 may be formed in a first subcase 121c, and a second accommodating portion 125 may be formed in a second subcase 122c.

Specifically, in the battery cell 100c according to this embodiment, the accommodating portion may be configured with the first accommodating portion 124 of the first subcase 121 c and the second accommodating portion 125 of the second subcase 122c. The first and second accommodating portions 124 and 125 may accommodate one and the other sides of the electrode assembly 110, respectively. Meanwhile, a mounting portion 130c having the protection element 140 mounted therein may be formed in the sealing portion 126c or an edge portion 127c or 128c, corresponding to any one of the first and second subcases 121 c and 122c.

As shown in FIG. 9, in the battery cell 100c', the sealing portion 126c may be bent in terms of space efficiency. In this case, the sealing portion 126c may be bent so that the other surface opposite to one surface of the sealing portion 126c, from which the outer surface of the mounting portion 130c is protruded, faces the first or second accommodating portions 124 or 125, i.e., so that the outer surface of the mounting portion 130c is protruded toward the outside of a case 120.

## Claims

1. A battery cell (100a) including:
an electrode assembly (110) having first and second electrode tabs (112, 113);
a case (120a) accommodating the electrode assembly (111) therein and having a sealing portion (126a, 126b, 126c) formed at the edge of the case (120a);
a protection element (140) connected to one of the electrode tabs (112, 113); and
a mounting portion (130a, 130b, 130c) positioned in the sealing portion (126a, 126b, 126c) and accommodating the protection element (140) therein.

2. The battery cell of claim 1, wherein the case (120a) has a first subcase (121 a) and a second subcase (122a) coupled to each other and thereby forming the sealing portion (126a, 126b, 126c) at the edge of the case (120a).

3. The battery cell of one of the preceding claims wherein the second electrode tab (113) is extracted to the outside of the case (120a) through the sealing portion (126a, 126b, 126c).

4. The battery cell of claim 1, wherein the mounting portion (130a, 130b, 130c) corresponds to the shape and size of the protection element (140).

5. The battery cell of claim 2, wherein the subcases (121 a, 122a) include an inner resin layer (129a) and a metal layer (129b) and wherein the inner resin layers (129a) of the subcases (121a, 122a) are coupled to each other in the sealing portion (126a).

6. The battery cell of claim 5, wherein the inner resin layer (129a) is made of a polymer resin, which is thermally fuseable.

7. The battery cell of claims 3 and 5, wherein the second electrode tab (113) includes an electrode tab film (114) made of the same material as the inner resin layer (129a).

8. The battery cell of one of the preceding claims, wherein the first electrode tab (112) is connected to the protection element (140) and the protection element (140) is extracted to the outside of the case (120a) through the sealing portion (126a, 126b, 126c).

9. The battery cell of claims 5 and 8, wherein the protection element (140) includes a connection portion film (143) made of the same material as the inner resin layer (129a).

10. The battery cell of one of the preceding claims, wherein the mounting portion (130a, 130b, 130c) is formed in only one of the subcases (121 a, 122a).

11. The battery cell of claim 10, wherein one of the subcases includes an accommodating portion (123b) for accommodating the electrode assembly (111) therein and wherein the mounting portion (130b) is formed in the other subcase.

12. The battery cell of claim 10, wherein both subcases (121 a, 122a) include an accommodating portion (124, 125) for accommodating the electrode assembly (111).

13. The battery cell of claim 11 or 12, wherein the sealing portion (126b, 126c) is bent such that the other surface opposite to one surface of the sealing portion (126c), from which an outer surface of the mounting portion (130b, 130c) is protruded, faces the accommodating portion (123b, 124, 125).

14. The battery cell of claim 10, wherein one of the subcases includes an accommodating portion (123a) for accommodating the electrode assembly (111) therein and wherein the mounting portion (130a) is formed in the same subcase.

15. The battery cell of one of the preceding claims, wherein the battery cell (100a) is a pouch-type battery cell.
